# EUROPÄISCHE PATENTSCHRIFT

(11) **EP 3 371 892 B1**
(45) Veröffentlichungstag und Bekanntmachung des Hinweises auf die Patenterteilung: **31.07.2019**
(21) Anmeldenummer: 17701466.9
(22) Anmeldetag: 24.01.2017
(51) Int. Cl.: H04B 1/3883, H04B 1/3888, H02J 7/00, H04M 1/02, H04B 1/3822, H02J 7/02, H04M 1/18, H02J 50/10

(54) **SCHUTZHÜLLENVORRICHTUNG MIT TEMPERATURGESTEUERTER LADESCHALTUNG FÜR EIN PORTABLES MOBILES ENDGERÄT**
PROTECTIVE CASE APPARATUS WITH TEMPERATURE-CONTROLLED CHARGING CIRCUIT FOR A PORTABLE MOBILE TERMINAL
DISPOSITIF FORMANT HOUSSE DE PROTECTION DOTÉ D'UN CIRCUIT DE CHARGE COMMANDÉ PAR LA TEMPÉRATURE POUR UN TERMINAL MOBILE PORTABLE

(30) Priorität: 15.02.2016 DE 102016001669
(43) Veröffentlichungstag der Anmeldung: 12.09.2018
(73) Patentinhaber: AUDI AG, 85045 Ingolstadt (DE)
(72) Erfinder: THIEL, Holger, 85139 Wettstetten (DE)
(86) Internationale Anmeldenummer: PCT/EP2017/051351
(87) Internationale Veröffentlichungsnummer: WO 2017/140462

(56) Entgegenhaltungen:
- US-A1- 2014 035 511
- US-A1- 2015 229 155

## Beschreibung

Die Erfindung betrifft eine Schutzhüllenvorrichtung für ein portables mobiles Endgerät, beispielsweise ein Smartphone. Das Endgerät kann in die Schutzhüllenvorrichtung eingelegt werden, sodass eine Rückseite des Endgeräts und Schmalseiten desselben beispielsweise gegen ein Anecken oder Verkratzen geschützt sind. Dagegen bleibt eine Vorderseite des Endgeräts, die beispielsweise einen Touchscreen (Berührungsbildschirm) aufweisen kann, frei für eine Bedienung.

Eine Schutzhülle der genannten Art ist beispielsweise aus der US 2014/0021909 A1 bekannt. Diese Schutzhüllenvorrichtung weist zum Abdecken der Rückseite des Endgeräts einen Grundplattenbereich auf, an welchen an den Seiten Seitenwandungen angeformt sind, die einen Rahmen bilden, in welchen das Endgerät eingelegt werden kann. In den Grundplattenbereich ist eine induktive Ladeeinrichtung integriert, um das Endgerät induktiv aufladen zu können. Ein Nachteil bei einer solchen Schutzhüllenvorrichtung ist, dass der aus den Seitenwandungen gebildete Rahmen, welcher die Schmalseiten des Endgeräts bedeckt, oftmals derart dick ist, dass sich das Endgerät nicht in dafür vorgesehene Halteeinrichtungen, sogenannte Cradles (Basisstation, Wiege) einstecken lässt. Außerdem lassen sich Anschlussstecker nicht immer durch Öffnungen in den Seitenwandungen hindurch vollständig in Anschlussbuchsen des Endgeräts stecken. Schließlich werden auch Lautsprecherausgänge durch solche Seitenwandungen beeinträchtigt.

Aus der US 2015 0077047 A1 ist eine Schutzeinrichtung bekannt, die lediglich an einer Rückseite eines Endgeräts befestigt werden kann. In diese Schutzeinrichtung ist ebenfalls ein induktives Ladesystem zum Aufladen des Endgeräts integriert. Nachteilig bei dieser Vorrichtung ist, dass sie Schmalseiten des Endgeräts nicht schützt.

Aus der WO 2015/156836 A1 ist eine zweiteilige Schutzhüllenvorrichtung bekannt. Eine dünnwandige Schutzhülle kann fest mit dem Endgerät verbunden werden. Diese Schutzhülle weist des Weiteren Schienenelemente auf, über welche die dünnwandige Schutzhülle mitsamt dem Endgerät in eine größere Schutzhülle eingeschoben werden kann, die wiederum beispielsweise eine Ladeeinrichtung für das Endgerät aufweisen kann. Die größere Schutzhülle umgibt dabei das Endgerät nur teilweise, da die Schutzfunktion schon durch die eng anliegende dünne Schutzhülle gegeben ist. Nachteilig bei dieser Anordnung ist, dass die eng anliegende dünne Schutzhülle es weiterhin erschweren kann, das Endgerät mit Zusatzgeräten zu verbinden, wie beispielsweise der besagten Cradle. Auch können durch die Seitenwandungen der dünnwandigen Schutzhülle Lautsprecher beeinträchtigt und/oder Steckerbuchsen nicht für alle Steckertypen zugänglich sein.

Aus der US 2014 / 0 035 511 A1 ist ein Batteriegehäuse bekannt, das dazu geeignet ist, ein mobiles Gerät, das darin aufgenommen ist, zu laden. Das Gehäuse hat ein Rückteil mit einer Seitenwand und einen Ladestecker, der im Gehäuse gelagert ist und ein flexibles Kabel aufweist. Der Hüllenteil des zweiteiligen Batteriegehäuses schützt das mobile Gerät auch, wenn der Batterieteil des Gehäuses entfernt ist.

Die CN 202818397 U zeigt eine signalverbessernde Schutzhülle für ein Apple® Mobiltelefon. Die Schutzhülle hat einen C-förmigen Schutzhüllenkörper wobei die Rückplatte mit Klemmarmen verbunden ist. Die Klemmarme sind mit verstärkten Löchern ausgestattet. Die Schutzhülle ist geeignet für einen Signalaustausch des Mobiltelefons.

Die WO 2014 / 037 676 A1 zeigt ein Modul zum drahtlosen Laden, das in die Schutzhülle eines mobilen Endgerätes eingebaut werden kann, ein Gerät, das den Leistungsversorgungsanschluss des mobilen Endgerätes verbindet, eine Induktionsspule und einen elektrischen Schaltkreis, der das Laden des mobilen Endgerätes mit dem von der Induktionsspule generierten Strom regelt. Der Grundplattenbereich weist ein Einschubfach auf, in das ein Steckelement einsteckbar ist.

In der CN 204559644 U ist für ein mobiles Endgerät eine Hülle für drahtloses Laden gezeigt. Diese umfasst eine Hülle, eine Platine für drahtloses Laden und einen Verbindungsstecker. Die Schutzhülle ist mit einem Spalt ausgestattet. Die Platine zum drahtlosen Laden hat einen Kontaktbügel, der in den Spalt ausfährt.

Aus der US 2015 / 0 148 093 A1 geht ein Gehäuse für ein Mobilgerät hervor, das zusätzliche Batterieleistung und zusätzlichen Speicherplatz für das Mobilgerät bereitstellt. Daten können vom Mobilgerät zum Speicher und vom Speicher zum Mobilgerät transferiert werden.

Aus der DE 10 2015 108 867 A1 geht ein System zum entfernten Kommunizieren mit einem Fahrzeug hervor, unter Verwendung einer Mobilkommunikationsvorrichtung und einer mit der Mobilkommunikationsvorrichtung verbundenen Hülle. Die Hülle umfasst einen Sender/Empfänger, der eine Kommunikation zwischen der Mobilkommunikationsvorrichtung und dem Fahrzeug ermöglicht. Das Verfahren stellt eine Anzeige/GUI zur Verfügung, die dem Benutzer einen Fahrzeuganhänger einschließlich Schließknopf, Aufschließknopf, Fernstartknopf, Kofferraumöffnungsknopf und Alarmknopf zeigt. Über die GUI überträgt der Nutzer Anhängerbefehle zum Fahrzeug.

Aus der US 2015/0229155 A1 ist ein elektrischer Kreis zum Kontrollieren einer Außenhüllentemperatur eines elektronischen Gerätes bekannt. Ein thermischer Sensor ist auf einem Gehäuse eines mobilen Handgeräts angebracht und mit einem Batterielader gekoppelt, der einen elektrischen Kreis zur Stromlimitierung hat. Wenn eine Temperatur des Gehäuses über einer Schwelle liegt, wird die Stromlimitierung reduziert, sodass der Strom des Batterieladers reduziert wird.

Der Erfindung liegt die Aufgabe zugrunde, eine portable Schutzhülle für ein portables mobiles Endgerät bereitzustellen und eine Zusatzelektronik für das Aufladen eines Akkumulators des Endgeräts bereitzustellen.

Die Aufgabe wird durch den Gegenstand gemäß Patentanspruch 1 gelöst. Vorteilhafte Weiterbildungen der Erfindung sind durch die Merkmale der abhängigen Patentansprüche, die folgende Beschreibung sowie die Figuren offenbart.

Durch die Erfindung ist eine Schutzhüllenvorrichtung für ein portables mobiles Endgerät bereitgestellt. Bei dem Endgerät kann es sich beispielsweise um ein Smartphone oder einen Tablet-PC (PC - Personal Computer) handeln. Die eigentliche Schutzhülle ist durch einen Hüllengrundkörper gebildet. Der Hüllengrundkörper weist einen Grundplattenbereich zum Abdecken einer Rückseite des Endgeräts auf. Zum direkten Anlegen der Rückseite des Endgeräts an den Grundplattenbereich weist dieser eine Anlagefläche auf. Des Weiteren weist der Hüllengrundkörper Seitenwandungen auf, die an den Grundplattenbereich angeordnet oder angeformt sind oder an diesen angrenzen und von der Anlagefläche abstehen und jeweils dazu ausgestaltet sind, direkt an einer jeweiligen Schmalseite des Endgeräts anzuliegen und diese zu umgreifen und hierdurch das Endgerät an der Anlagefläche zu halten. Durch, die Seitenwandungen ist also in der an sich bekannten Weise ein Rahmen gebildet, in welchen das Endgerät eingelegt oder eingeklipst wird. Bei der Schutzhüllenvorrichtung wird dabei davon ausgegangen, dass das Endgerät eine quaderförmige Grundform aufweist, wobei die Vorderseite mit dem Touchscreen und die gegenüberliegende Rückseite die größten Flächen aufweisen. Die kleineren Seitenflächen der quaderförmigen Grundform sind hier als Schmalseiten bezeichnet, von denen es vier gibt. Sie können eben oder gekrümmt geformt sein. Die Anlagefläche des Hüllengrundkörpers im Grundplattenbereich entspricht in ihrer Außenkontur der rechteckigen Grundform der Rückseite des Endgeräts. Hierbei können aber auch Krümmungen der Rückseite und/oder Schmalseiten des Endgeräts durch die Anlagefläche und die besagten Seitenwandungen des Hüllengrundkörpers nachgebildet sein, um hierdurch ein Anschmiegen der Anlagefläche beziehungsweise der Anlagebereiche der Seitenwandungen an das Endgerät zu erreichen. Anders ausgedrückt grenzen die Anlagefläche und die Seitenwandungen zusammen ein Aufnahmevolumen für das Endgerät ab, in welches das Endgerät eingelegt oder hineingedrückt werden kann. Die Anlageflächen und die Seitenwandungen liegen an dem Gehäuse des Endgeräts insbesondere direkt an, ohne ein dazwischen angeordnetes Material.

Um nun das Endgerät auch im eingelegten Zustand, wenn es sich in der Schutzhüllenvorrichtung befindet, ungehindert nutzen zu können, ist erfindungsgemäß vorgesehen, dass der Hüllengrundkörper drei Seitenwandungen aufweist. Insbesondere weist er nur drei Seitenwandungen auf. Mit anderen Worten ist kein vollständiger, alle vier Schmalseiten des Endgeräts abdeckender Rahmen gebildet. Von den drei Seitenwandungen sind zwei an einer jeweiligen Längsseite oder Langseite der Anlagefläche angeordnet. Diese bedecken bei eingelegtem Endgerät die jeweilige Schmalseite desselben insbesondere vollständig, um das Endgerät an der Anlagefläche zu halten. Die dritte Seitenwandung ist an einer ersten Kurzseite der Anlagefläche angeordnet. Mit anderen Worten ist eine der ersten Kurzseite gegenüber angeordnete zweite Kurzseite der Anlagefläche wandlos ausgestaltet. Ist nun das Endgerät in der Schutzhüllenvorrichtung angeordnet, so ist eine an dieser zweiten Kurzseite angeordnete Schmalseite des Endgeräts somit von dem Hüllengrundkörper unbedeckt, weil dort eine Seitenwandung fehlt. Wird das Endgerät also bestimmungsgemäß in die Schutzhüllenvorrichtung eingelegt, so ist eine Schmalseite des Endgeräts nicht durch eine Seitenwandung abgedeckt, sodass dort befindliche elektrische Anschlüsse und/oder ein Mikrofoneingang und/oder ein Lautsprecherausgang nicht durch den Hüllengrundkörper beeinträchtigt sind. Ein weiterer Vorteil einer unbedeckten Schmalseite des Endgeräts ist, dass dieses auch in die besagte Cradle, beispielsweise eines Ladegeräts, eingesteckt werden kann, ohne dass eine Seitenwandung der Schutzhüllenvorrichtung dieses Einstecken blockieren könnte.

Zu der Schutzhüllenvorrichtung gehört gemäß eines weiteren Aspekts der Erfindung ein Zusatzteil, das hier als Steckelement bezeichnet ist. Dabei ist in dem Grundplattenbereich des Hüllengrundkörpers, also an der Rückseite des Endgeräts, ein Einschubschacht oder ein Einschubfach ausgestaltet oder bereitgestellt. Das Steckelement weist einen Steckbereich auf, der ganz oder bereichsweise in der Form diesem Einschubfach entspricht oder zu dem Einschubfach korrespondierend ausgestaltet ist. Über diesen Steckbereich ist also das Steckelement in das Einschubfach einsteckbar. An den Steckbereich ist ein Eingriffselement mit elektrischen Kontakten angeordnet. Falls das Steckelement mit seinem Steckbereich in das Einschubfach des Grundplattenbereichs eingesteckt ist, ist das besagte Eingriffselement an der zweiten Kurzseite der Anlagefläche angeordnet. Ist also ein Endgerät in die Schutzhüllenvorrichtung eingelegt, so liegt das Eingriffselement an der offenen oder unbedeckten Schmalseite des Endgeräts an. Die elektrischen Kontakte berühren dabei bevorzugt korrespondierende elektrische Kontakte des Endgeräts. Insbesondere stecken sie dann in einer Anschlussbuchse des Endgeräts. Durch die Erfindung ergibt sich der Vorteil, dass in dem Steckelement eine Zusatzelektronik vorgesehen oder bereitgestellt werden kann, die über die elektrischen Kontakte an das Endgerät angeschlossen werden kann. Der besagte Steckbereich kann beispielsweise durch ein Spritzgussverfahren hergestellt werden, mittels welchem die Zusatzelektronik mit einem Polymer oder Kunststoff umspritzt werden kann und hierbei die benötigte korrespondierende Form hergestellt werden kann.

Gemäß der Erfindung weist das Steckelement eine Ladeschaltung zum Aufladen eines Akkumulators des Endgeräts auf. Die Ladeschaltung kann also über die elektrischen Kontakte einen Akkumulator des Endgeräts mit elektrischer Energie aufladen.

Gemäß der Erfindung weist die Ladeschaltung einen Temperatursensor auf und ist dazu eingerichtet, einen über die elektrischen Kontakte an das Endgerät abgegebenen Ladestrom in Abhängigkeit von einem Temperatursignal des Temperatursensors einzustellen. Insbesondere ist vorgesehen, dass eine Stromstärke eines Ladestroms bei einer Temperatur oberhalb eines Temperaturschwellenwerts kleiner ist oder eingestellt wird als bei einer Temperatur unterhalb des Temperaturschwellenwerts. So kann beispielsweise ein Ladestrom, der unterhalb des Temperaturschwellenwerts in einem Bereich von 0,8 bis 1,5 Ampere, insbesondere 1 Ampere, eingestellt ist, oberhalb des Temperaturschwellenwerts auf einen Wert kleiner als 0,8 Ampere, beispielsweise 500 Milliampere, eingestellt werden. Der Temperaturschwellenwert kann beispielsweise in einem Bereich von 40 bis 50 Grad liegen, beispielsweise 45 Grad betragen.

Zu der Erfindung gehören auch optionale Weiterbildungen, durch deren Merkmale sich zusätzliche Vorteile ergeben.

Zwei Weiterbildungen betreffen das Problem, dass durch die offene Schmalseite das Endgerät aus der Schutzhüllenvorrichtung an der zweiten Kurzseite herausrutschen könnte. Die Seitenwandungen halten das Endgerät an dem Grundplattenbereich in alle Bewegungsrichtungen insbesondere durch Haftreibung und/oder einen Formschluss fest.

Eine Weiterbildung dazu sieht vor, dass die Anlagefläche und/oder ein jeweiliger Anlagebereich der Seitenwandung, der bei eingelegtem Endgerät an der jeweiligen Schmalseite desselben anliegt, eine gummierte Oberfläche aufweist. Hierdurch wird eine Haftreibung zwischen einerseits der Anlagefläche und/oder dem Anlagebereich und andererseits der Oberfläche des mobilen Endgeräts erzeugt, durch welche das Endgerät in der Schutzhüllenvorrichtung gehalten ist.

Eine andere Weiterbildung sieht vor, dass bei den beiden an den Langseiten der Anlagefläche angeordneten Seitenwandungen deren Enden, die der offenen zweiten Kurzseite zugewandt sind, aufeinander zugekrümmt ausgeformt sind. Mit anderen Worten bilden die beiden Seitenwandungen an der Kurzseite eine Zangenform. Hierdurch bilden die beiden Enden bei eingelegtem Endgerät einen Formschluss zum Halten des Endgeräts gegen ein Herausrutschen in Richtung der zweiten Kurzseite.

Eine Weiterbildung sieht vor, dass das Steckelement für ein induktives Ladesystem eine sekundärseitige elektrische Spule zum Erzeugen einer elektrischen Spannung aus einem magnetischen Wechselfeld aufweist und die Ladeschaltung dazu ausgestaltet ist, dieser Spannung an den elektrischen Kontakten bereitzustellen. Hierdurch ergibt sich der Vorteil, dass das Endgerät in seiner Schutzhüllenvorrichtung in ein magnetisches Wechselfeld gebracht werden kann und das Wechselfeld mittels der sekundärseitigen elektrischen Spule zum Erzeugen einer elektrischen Spannung zum Aufladen des Endgeräts genutzt werden kann.

Gemäß einer Weiterbildung ist in dem Steckelement ein elektrischer Akkumulator zum Speichern von elektrischer Energie bereitgestellt. Die Ladeschaltung ist dazu ausgestaltet, die elektrische Energie an den elektrischen Kontakten bereitzustellen, sodass sie dort von dem Endgerät abgegriffen werden kann. Man kann mehrere solcher Steckelemente bereitstellen und bei entladenem Akkumulator durch Austauschen des Steckelements zusätzliche elektrische Energie für das mobile Endgerät bereitstellen.

Eine Weiterbildung sieht vor, dass das Steckelement einen Datenspeicher aufweist und eine Speichersteuerschaltung des Steckelements dazu eingerichtet ist, über die elektrischen Kontakte Speicherdaten zwischen diesem Datenspeicher und dem Endgerät auszutauschen. Hierdurch kann das Steckelement als Ersatz für einen USB-Speicherstab (USB - Universal Serial Bus) genutzt werden. Das Steckelement stellt also eine Speichererweiterung für einen Speicher des Endgeräts dar.

Gemäß einer Weiterbildung ist in das Steckelement eine Funkschlüsseleinrichtung zum drahtlosen Bedienen eines Schließsystems eines Kraftfahrzeugs integriert. Eine solche Funkschlüsseleinrichtung ist an sich im Zusammenhang mit separaten Funkschlüsseln für Kraftfahrzeuge bekannt. Eine Kommunikationseinrichtung des Steckelements ist dazu eingerichtet, über die elektrischen Kontakte zumindest ein Steuersignal zu empfangen und daraufhin die Funkschlüsseleinrichtung zu aktivieren. Hierdurch ergibt sich der Vorteil, dass ein Benutzer eines Kraftfahrzeugs nicht einen separaten Funkschlüssel und das Endgerät mit sich führen muss, also zwei Geräte, sondern in der Schutzhüllenvorrichtung sowohl das Endgerät als auch eine Funkschlüsseleinrichtung mitgeführt werden können, also nur ein einziges Accessoire nötig ist. Durch die Steuerung mittels des zumindest einen Steuersignals vom Endgerät aus ist sichergestellt, dass die Funkschlüsseleinrichtung nicht auch dann zum Entriegeln eines Kraftfahrzeugs genutzt werden kann, wenn das Steckelement allein vorliegt, also z.B. verloren geht. Durch das Steuersignal kann beispielsweise eine Freischaltung der Funkschlüsseleinrichtung erfolgen, indem sie beispielsweise erst in Abhängigkeit von einem in das Endgerät korrekt eingegebenen PIN-Code (PIN - Personal Identification Number) erfolgt.

Eine Weiterbildung der Erfindung sieht vor, dass das Steckelement eine NFC-Kommunikationseinrichtung (NFC - Near Field Communication) für eine drahtlose Nahfeldkommunikation aufweist. Eine Bezahlsteuereinrichtung des Steckelements ist dazu eingerichtet, in Abhängigkeit von einem über die elektrischen Kontakte empfangenes Bezahlsignal einen bargeldlosen Bezahlvorgang über die NFC-Kommunikationseinrichtung durchzuführen. Hierdurch kann das Steckelement also als drahtlose Bezahlkarte genutzt werden. Ein Verlust des Steckelements kann nicht zum Missbrauch führen, da das Steckelement einen Bezahlvorgang nur in Abhängigkeit von einem Bezahlsignal des Endgeräts tatsächlich durchführt. Die Nahfeldkommunikation kann beispielsweise auf einer RFID-Technologie (RFID - Radio Frequency Identification) oder einer Bluetooth-Technologie basieren. Die Bezahlsteuereinrichtung kann auf einem integrierten Schaltkreis für bargeldloses Bezahlen basieren, wie er an sich im Zusammenhang mit Geldkarten oder Kreditkarten bekannt ist.

Im Folgenden ist ein Ausführungsbeispiel der Erfindung beschrieben. Hierzu zeigt:
- Fig. 1: eine schematische Darstellung einer Ausführungsform der erfindungsgemäßen Schutzhüllenvorrichtung mit einem Hüllengrundkörper und einem Steckelement;
- Fig. 2: eine schematische Darstellung des Hüllengrundkörpers der Schutzhüllenvorrichtung von Fig. 1;
- Fig. 3: eine schematische Darstellung des Steckelements der Schutzhüllenvorrichtung von Fig. 1;
- Fig. 4: eine schematische Darstellung der Schutzhüllenvorrichtung von Fig. 1 mit eingelegtem mobilen Endgerät, wobei eine Vorderseite des Endgeräts dargestellt ist,
- Fig. 5: eine schematische Darstellung der Schutzhüllenvorrichtung mit eingelegtem Endgerät von Fig. 4, wobei eine der Vorderseite gegenüberliegende Rückseite dargestellt ist; und
- Fig. 6: eine schematische Darstellung der Schutzhüllenvorrichtung mit eingelegtem Endgerät, wobei eine von dem Hüllengrundkörper unbedeckte Schmalseite des Endgeräts mit daran angeordnetem Eingriffselement des Steckelements dargestellt ist.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

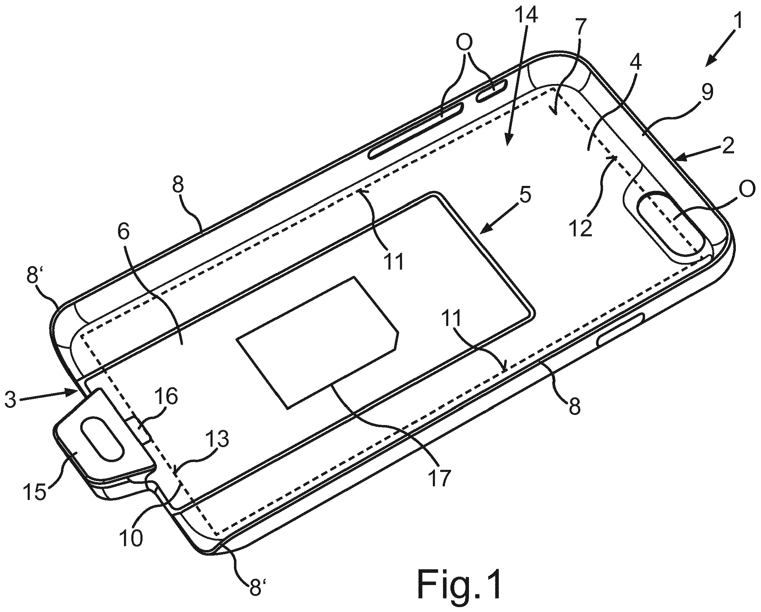

Fig. 1 zeigt eine Schutzhüllenvorrichtung 1, durch welche ein mobiles Endgerät, insbesondere ein Smartphone, gegen eine Beschädigung durch Anecken oder Entlangschaben an einem harten Gegenstand geschützt werden kann. Die Schutzhüllenvorrichtung 1 kann zweiteilig ausgestaltet sein und hierbei einen Hüllengrundkörper 2 und ein Steckelement 3 aufweisen. Die jeweilige Form des Hüllengrundkörpers 2 und des Steckelements 3 kann beispielsweise mittels eines Spritzgussverfahrens hergestellt werden. Das Steckelement 3 kann in den Hüllengrundkörper 2 eingesteckt sein. Der Hüllengrundkörper 2 kann hierbei einen Grundplattenbereich 4 aufweisen, in welchem ein Einschubfach 5 zum Einstecken eines Steckbereichs 6 des Steckelements 3 ausgebildet sein kann.

Der Hüllengrundkörper 2 kann des Weiteren eine Anlagefläche 7 aufweisen, die mit einer Rückseite eines mobilen Endgeräts in Anlage gebracht werden kann. Hierdurch ist dann die Rückseite des mobilen Endgeräts durch den Grundplattenbereich 4 des Hüllengrundkörpers 2 abgedeckt oder abgeschirmt oder geschützt. Angrenzend an die Anlagefläche 7 können an den Grundplattenbereich 4 Seitenwandungen 8, 9 angeformt sein. Die Anlagefläche 7 kann dabei korrespondierend zu einer Form des bestimmungsgemäß vorgesehenen Endgeräts eine rechteckige Grundform 10 aufweisen und entsprechend zwei gegenüberliegende Langseiten 11 und eine erste Kurzseite 12 und eine gegenüberliegende zweite Kurzseite 13 aufweisen. Somit ergeben sich zwei an den Langseiten 11 angeordnete Seitenwandungen 8 und eine dritte, an der ersten Kurzseite 12 angeordnete Seitenwandung 9. Die Seitenwandungen 8, 9 stehen von einer Ebene der Anlagefläche 7 senkrecht oder schräg ab oder ragen über diese hinaus und grenzen somit ein Aufnahmevolumen 14 zum Einlegen des Endgeräts ab. Das Aufnahmevolumen 14 ist also von den Seitenwandungen 8, 9 umrahmt. An der zweiten Kurzseite 13 ist dagegen keine Seitenwandung vorgesehen oder angeordnet. Das Aufnahmevolumen 14 ist also zur zweiten Kurzseite 13 hin offen, was den Hüllengrundkörper 4 angeht. An der zweiten Kurzseite 13 ist bei einem in den Einschubschacht 5 eingesteckten Steckelement 3 ein Eingriffselement 15 des Steckelements 3 mit elektrischen Kontakten 16 angeordnet. Das Steckelement 3 kann für ein Endgerät eine Zusatzelektronik 17 bereitstellen, die über die elektrischen Kontakte 16 elektrisch mit dem Endgerät kontaktiert werden kann.

Der Hüllengrundkörper 4 kann dabei in an sich bekannter Weise Aussparungen O aufweisen, um einen Zugang zu Elementen des Endgeräts auch im eingelegten Zustand des Elements in der Schutzhüllenvorrichtung 1 bereitzustellen.

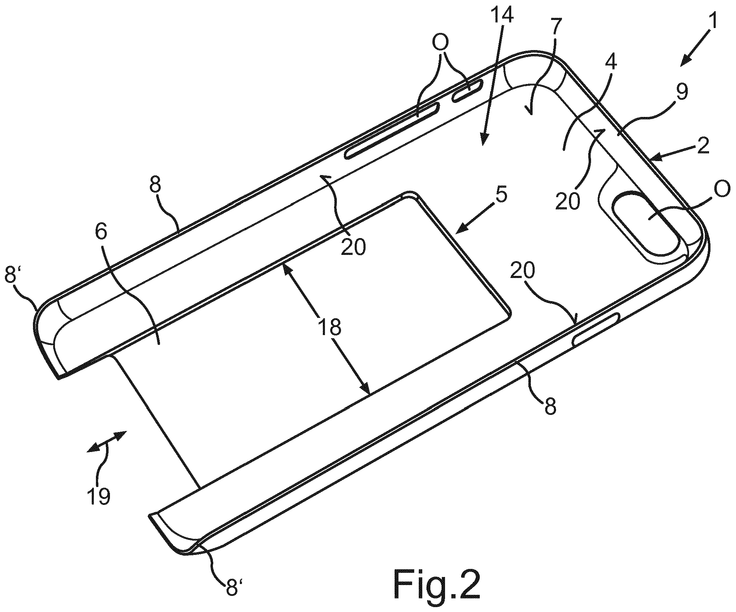

Fig. 2 zeigt den Hüllengrundkörper 2 in Alleinstellung, das heißt das Steckelement 3 ist aus dem Einschubfach 5 entfernt. Das Einschubfach 5 kann beispielsweise eine Schieneneinrichtung 18 aufweisen, durch welche das Steckelement geführt entlang einer Steckrichtung 19 in das Einschubfach 5 eingesteckt und aus diesem herausgezogen werden kann.

Die Anlagefläche 7 und/oder Berührbereiche oder Anlagebereiche 20 der Seitenwandungen 8, 9, welche bei eingelegtem Endgerät mit diesem in Berührung sind, können gummiert ausgestaltet sein. Hierdurch wird eine Haftreibung zwischen Endgerät und Hüllengrundkörper 2 vergrößert im Vergleich zu einem Hüllengrundkörper mit lediglich ungummiertem Kunststoff.

Enden 8' der Seitenwandungen 8, die an der zweiten Kurzseite 13 angeordnet sind, können zu der Anlagefläche 7 hin gekrümmt sein, das heißt aufeinander zu gekrümmt sein.

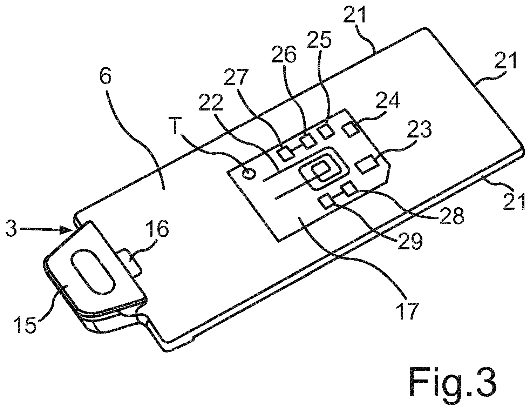

Fig. 3 veranschaulicht das Steckelement 3 in Alleinstellung. Das Steckelement 3 kann an seinem Steckbereich 6 Schienenelemente oder Führungselemente 21 aufweisen, welche in der Form der Schieneneinrichtung 18 des Einschubfachs 5 korrespondieren.

Die Zusatzelektronik 17 kann beispielsweise eine elektrische Sekundärspule 22 zum induktiven Erzeugen einer elektrischen Spannung an den elektrischen Kontakten 16 umfassen. Entsprechend weist die Zusatzelektronik 17 auch eine Ladeschaltung 23 zum Bereitstellen der Spannung an den Kontakten 16 auf.

Zusätzlich oder alternativ dazu kann ein elektrischer Akkumulator 24 Bestandteil der Zusatzelektronik 17 sein. Zusätzlich oder alternativ dazu kann ein Datenspeicher 25 in der Zusatzelektronik 17 bereitgestellt sein. Zusätzlich oder alternativ dazu kann eine Funkschlüsseleinrichtung 26 mit einer Kommunikationsschaltung 27 zum Koppeln der Funkschlüsseleinrichtung 26 mit den elektrischen Kontakten 16 vorgesehen sein. Zusätzlich oder alternativ dazu kann eine NFC-Kommunikationseinrichtung 28 mit einer Bezahlsteuereinrichtung 29 vorgesehen sein.

Die Ladeeinrichtung kann beispielsweise auf der Grundlage des Qi-Standards ausgestaltet sein.

Zum Einstellen eines Ladestroms kann ein Temperatursensor T zum Erzeugen eines Temperatursignals vorgesehen sein. Hierdurch kann das Endgerät beim Aufladen durch die Zusatzschaltung 17 vor einer Überhitzung geschützt werden.

Durch die Ladeeinrichtung kann eine Ladeleistung von bis zu 3 Ampere bei 15 Watt realisiert werden.

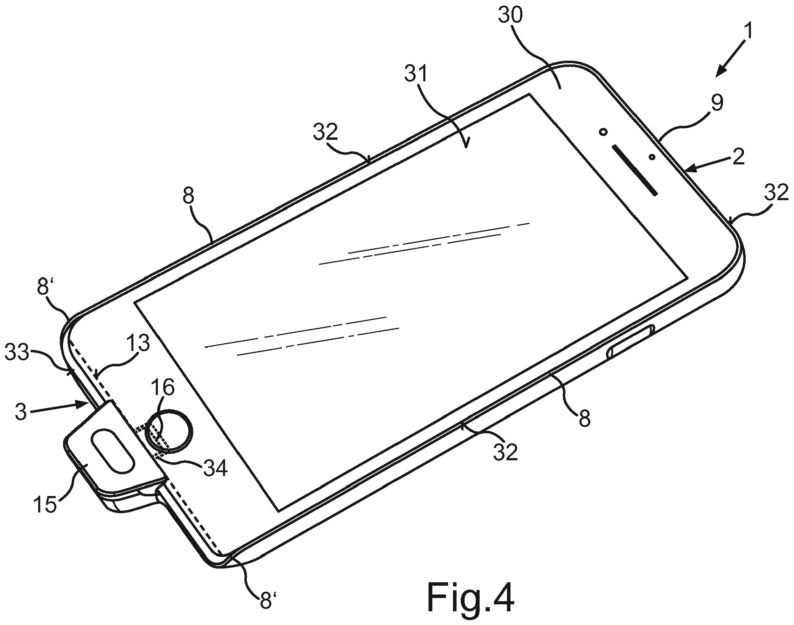

Fig. 4 veranschaulicht die Schutzhüllenvorrichtung 1 mit eingelegtem Endgerät 30, bei dem es sich beispielsweise um ein Smartphone handeln kann. Eine Vorderseite 31 des Endgeräts 30 ist für die Bedienung und Betrachtung zugänglich. Die Seitenwandungen 8, 9 umgreifen in der Form korrespondierende Schmalseiten 32 des Endgeräts 30 und halten dieses hierdurch an der Anlagefläche 7. Eine an der zweiten Kurzseite 13 angeordnete Schmalseite 33 ist dagegen von dem Hüllengrundkörper 2 unbedeckt. Lediglich das Eingriffselement 15 des Steckelements 3 liegt an der Schmalseite 33 an. Die elektrischen Kontakte 16 sind dabei in einer Anschlussbuchse 34 des Endgeräts 30 eingesteckt. Das Steckelement 3 kann aus dem Einschubfach 5 herausgezogen werden, ohne dass hierzu das Endgerät 30 aus dem Hüllengrundkörper 2 herausgenommen werden muss. Bei abgezogenem oder herausgezogenem Steckelement 3 ist die Schmalseite 33 frei zugänglich, sodass das Endgerät 30 zusammen mit dem Hüllengrundkörper 2 an der Schmalseite 33 beispielsweise an eine Cradle angeschlossen werden kann.

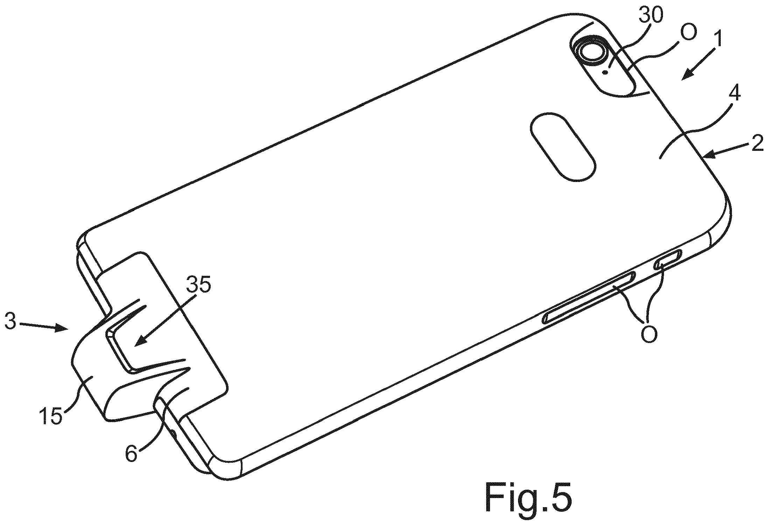

Fig. 5 veranschaulicht, wie durch den Grundplattenbereich 4 des Hüllengrundkörpers 2 eine Rückseite des Endgeräts 30 abgedeckt oder geschützt ist. Das Einsteckelement 15 kann als Griffvorrichtung zum Greifen des Steckelements 3 ausgestaltet sein und hierzu beispielsweise eine Eingriffskuhle oder Eingriffsvertiefung 35 aufweisen. Mit dieser kann eine Zugkraft von Fingern eines Benutzers auf das Eingriffselement 15 übertragen werden.

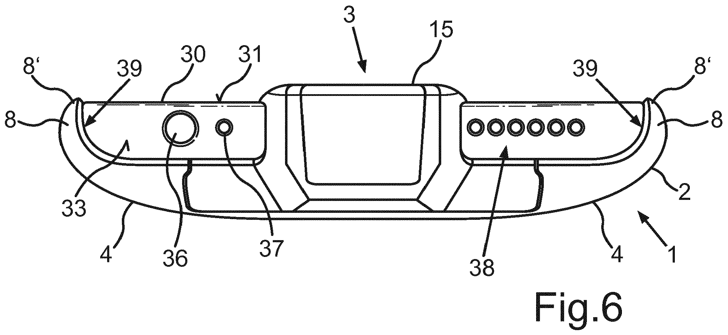

Fig. 6 veranschaulicht die Schmalseite 33 des Endgeräts 30. Durch den wandlosen oder unbedeckten Bereich an der Kurzseite 13 sind beispielsweise eine Kopfhörerbuchse 36 und/oder ein Mikrofon 37 und/oder ein Lautsprecherausgang 38 frei, das heißt von dem Hüllengrundkörper 2 unbeeinflusst. Die Enden 8' der Seitenwände 8 bilden mit einem an die Schmalseite 33 angrenzenden Randbereich 39 einen Formschluss, sodass das Endgerät 30 gegen ein Herausrutschen in Richtung der Kurzseite 13, das heißt entlang der Steckrichtung 19, gesichert ist.

Somit kann insgesamt durch die Schutzhüllenvorrichtung 1 eine Schutzhülle mit drahtloser Auflademöglichkeit, insbesondere nach dem Qi-Standard, bereitgestellt sein. Es ist eine Schutzhülle für ein Smartphone oder mobiles Telefon bereitgestellt, wobei ein Kopfhörer-Anschluss, ein Mikrofon und/oder ein Lautsprecher frei zugänglich bleiben können, wenn sie an der Schmalseite 33 angeordnet sind. Durch die beschriebenen Aussparungen O können auch eine Kamera und Bedienelemente frei zugänglich bleiben. Die Auflademöglichkeit ist in dem Steckelement 3 integriert, sodass ein einfaches Abziehen ohne Demontage des Hüllengrundkörpers 2 möglich ist und damit bei abgezogenem oder entferntem Steckelement 3 ein direkter und ungehinderter Zugang an die Buchse 34 für weitere Anwendungen möglich ist.

Das Besondere an der Schutzhüllenvorrichtung 1 ist somit, dass ein Mikrofon, Lautsprecher und eine Klinkenbuchse frei zugänglich sind, um die akustischen Eigenschaften des mobilen Endgeräts nicht negativ zu beeinflussen und die Verwendung jedes Klinkensteckers zu ermöglichen. Ferner ist die eigentliche Ladeelektronik in einer entnehmbaren Einheit in Form des Steckelements 3 verbaut, die es möglich macht, ohne den Hüllengrundkörper 2 zu demontieren, die Buchse 34 frei zugänglich zu machen, um andere Zubehörteile zu verbinden oder zu verwenden. Durch das entnehmbare Steckelement 3 ist die Aufladeelektronik auch beispielsweise durch einen Zusatzakku austauschbar, der durch ein weiteres Steckelement bereitgestellt werden kann.

Insgesamt zeigt das Beispiel, wie durch die Erfindung ein Wireless-Charging-Cover für ein Smartphone bereitgestellt werden kann.

## Patentansprüche

1. Schutzhüllenvorrichtung (1) für ein portables mobiles Endgerät (30), aufweisend einen Hüllengrundkörper (2)
- mit einem Grundplattenbereich (4) zum Abdecken einer Rückseite des Endgeräts (30), wobei der Grundplattenbereich (4) eine Anlagefläche (7) zum direkten Anlegen der Rückseite des Endgeräts (30) aufweist, und
- mit Seitenwandungen (8, 9), die an den Grundplattenbereich (4) angeformt sind und von der Anlagefläche (7) abstehen und jeweils dazu ausgestaltet sind, direkt an einer jeweiligen Schmalseite (32) des Endgeräts (30) anzuliegen und diese zu umgreifen und hierdurch das Endgerät (30) an der Anlagefläche (7) zu halten, und
- der Hüllengrundkörper (2) drei Seitenwandungen (8, 9) aufweist, von denen zwei (8) an einer jeweiligen Langseite (11) der Anlagefläche (7) und die dritte (9) an einer ersten Kurzseite (12) der Anlagefläche (7) angeordnet sind, und eine der ersten Kurzseite (12) gegenüber angeordnete zweite Kurzseite (13) der Anlagefläche (7) wandlos ausgestaltet ist, so dass bei in der Schutzhüllenvorrichtung (1) angeordnetem Endgerät (30) eine an der zweiten Kurzseite (13) angeordnete Schmalseite (33) des Endgeräts (30) von dem Hüllengrundkörper (4) unbedeckt ist,
**dadurch gekennzeichnet, dass**
in dem Grundplattenbereich (4) ein Einschubfach (5) ausgestaltet ist und die Schutzhüllenvorrichtung (30) ein Steckelement (3) aufweist, bei welchem ein Steckbereich (6) zumindest bereichsweise in der Form korrespondierend zu dem Einschubfach (5) ausgestaltet, wobei über den Steckbereich (6) das Steckelement (3) in das Einschubfach (5) einsteckbar ist und wobei an den Steckbereich (6) ein Eingriffselement (15) mit elektrischen Kontakten (16) angeordnet ist und bei in das Einschubfach (5) eingestecktem Steckbereich (6) das Eingriffselement (15) an der zweiten Kurzseite (13) der Anlagefläche (7) angeordnet ist und das Eingriffselement (15) als Griffvorrichtung zum Greifen des Steckelements (3) ausgestaltet ist und hierzu eine Eingriffskuhle oder Eingriffsvertiefung (35) aufweist,
wobei das Steckelement (3) eine Ladeschaltung (23) zum Aufladen eines elektrischen Akkumulators des Endgerätes (30) aufweist und die Ladeschaltung (23) einen Temperatursensor (T) aufweist und dazu eingerichtet ist, einen über die elektrischen Kontakte (16) an das Endgerät (30) abgegebenen Ladestrom in Abhängigkeit von einem Temperatursignal des Temperatursensors (T) einzustellen, so dass eine Stromstärke eines Ladestroms bei einer Temperatur oberhalb eines Temperaturschwellenwerts kleiner eingestellt wird als bei einer Temperatur unterhalb des Temperaturschwellenwerts.

2. Schutzhüllenvorrichtung (1) nach Anspruch 1, wobei die Anlagefläche (7) und/oder ein jeweiliger Anlagebereich (20) der Seitenwandungen (8, 9), der bei eingelegtem Endgerät (30) an der jeweiligen Schmalseite (32) desselben anliegt, eine gummierte Oberfläche aufweist.

3. Schutzhüllenvorrichtung (1) nach einem der vorhergehenden Ansprüche, wobei jeweilige der zweiten Kurzseite (13) zugewandte Enden (8') der beiden an den Langseiten (11) angeordneten Seitenwandungen (8) aufeinander zu gekrümmt ausgeformt sind und hierdurch bei eingelegtem Endgerät (30) einen Formschluss zum Halten des Endgeräts (30) gegen ein Herausrutschen in Richtung der zweiten Kurzseite (13) bilden.

4. Schutzhüllenvorrichtung (1) nach einem der vorhergehenden Ansprüche, wobei das Steckelement (3) für ein induktives Ladesystem eine sekundärseitige elektrische Spule (22) zum Erzeugen einer elektrischen Spannung aus einem magnetischen Wechselfeld aufweist und die Ladeschaltung (23) zum Bereitstellen der Spannung an den elektrischen Kontakten (16) ausgestaltet ist.

5. Schutzhüllenvorrichtung (1) nach einem der vorhergehenden Ansprüche wobei das Steckelement (3) einen elektrischen Akkumulator (24) zum Speichern von elektrischer Energie aufweist und die Ladeschaltung (17) zum Bereitstellen der elektrischen Energie an den elektrischen Kontakten (16) ausgestaltet ist.

6. Schutzhüllenvorrichtung (1) nach einem der vorhergehenden Ansprüche, wobei das Steckelement (3) einen Datenspeicher (25) aufweist und eine Speichersteuerschaltung des Steckelements (3) dazu eingerichtet ist, über die elektrischen Kontakte Speicherdaten zwischen dem Datenspeicher (25) und dem Endgerät (30) auszutauschen.

7. Schutzhüllenvorrichtung (1) nach einem der vorhergehenden Ansprüche, wobei das Steckelement (3) eine Funkschlüsseleinrichtung (26) zum drahtlosen Bedienen eines Schließsystems eines Kraftfahrzeugs aufweist und eine Kommunikationsschaltung (27) des Steckelements (3) dazu eingerichtet ist, über die elektrischen Kontakte (16) zumindest ein Steuersignal zu empfangen und daraufhin die Funkschlüsseleinrichtung (26) zu aktivieren.

8. Schutzhüllenvorrichtung (1) nach einem der vorhergehenden Ansprüche, wobei das Steckelement (3) eine NFC-Kommunikationseinrichtung (28) für eine drahtlose Nahfeldkommunikation aufweist und eine Bezahlsteuereinrichtung (29) des Steckelements (3) dazu eingerichtet ist, in Abhängigkeit von einem über die elektrischen Kontakte empfangenes Bezahlsignal einen bargeldlosen Bezahlvorgang über die NFC-Kommunikationseinrichtung (28) durchzuführen.

## Claims

1. Protective cover apparatus (1) for a portable mobile device (30), comprising a cover main body (2)
- having a base plate portion (4) for covering a back side of the device (30), wherein the base plate portion (4) has a contact surface (7) for directly applying to the back side of the device (30), and
- having side walls (8, 9) formed on the base plate portion (4) and protruding from the contact surface (7) and respectively configured to abut directly on a respective narrow side (32) of the device (30) and to surround this and thereby to hold the device (30) on the contact surface (7), and
- the cover main body (2) has three side walls (8, 9), of which two (8) are arranged on a respective long side (11) of the contact surface (7) and the third (9) on a first short side (12) of the contact surface (7), and a second short side (13) of the contact surface (7) arranged opposite to the first short side (12) is designed without walls, so that with the device (30) arranged in the protective cover apparatus (1), a narrow side (33) of the device (30) arranged on the second short side (13) is covered by the cover main body (4),
**characterised in that**
an insertion compartment (5) is designed in the base plate portion (4) and the protective cover apparatus (30) has a plug element (3), in which a plug region (6) is designed at least partially in a form corresponding to the insertion compartment (5), wherein the plug element (3) can be inserted into the insertion compartment (5) via the plug region (6) and wherein an engagement element (15) with electrical contacts (16) is arranged on the plug region (6), and with a plug region (6) inserted into the insertion compartment (5), the engagement element (15) is arranged on the second short side (13) of the contact surface (7) and the engagement element (15) is designed as a gripping device for gripping the plug element (3) and for this purpose has an engagement hollow or engagement recess (35), wherein the plug element (3) has a charging circuit (23) for charging an electrical accumulator of the device (30), and the charging circuit (23) has a temperature sensor (T) and is set up to control a charging current emitted via the electrical contacts (16) to the device (30) in response to a temperature signal from the temperature sensor (T), so that a current intensity of the charging current at a temperature above a temperature threshold is set lower than at a temperature below the temperature threshold.

2. Protective cover apparatus (1) according to claim 1, wherein the contact surface (7) and/or a respective contact region (20) of the side walls (8, 9), which abuts on the respective narrow side (32) of the device (30) with the device (30) inserted, has a rubberised surface.

3. Protective cover apparatus (1) according to any one of the preceding claims, wherein respective ends (8') of the two side walls (8) arranged on the long sides (11), said ends (8') facing toward the second short side (13), are formed curved towards each other and thereby form a positive engagement for holding the device (30), preventing the device (30) from slipping out in the direction of the second short side (13) when the device (30) is inserted.

4. Protective cover apparatus (1) according to any one of the preceding claims, wherein the plug element (3) for an inductive charging system has a secondary-side electric coil (22) for generating an electrical voltage from an alternating magnetic field and the charging circuit (23) is designed to provide the voltage at the electrical contacts (16).

5. Protective cover apparatus (1) according to any one of the preceding claims, wherein the plug element (3) has an electrical accumulator (24) for storing electrical energy and the charging circuit (17) is designed to provide the electrical energy at the electrical contacts (16).

6. Protective cover apparatus (1) according to any one of the preceding claims, wherein the plug element (3) has a data memory (25) and a memory control circuit of the plug element (3) is configured to exchange memory data between the data memory (25) and the device (30) via the electrical contacts.

7. Protective cover apparatus (1) according to any one of the preceding claims, wherein the plug element (3) has a radio key device (26) for wireless operation of a locking system of a motor vehicle and a communication circuit (27) of the plug element (3) is configured to receive at least one control signal via the electrical contacts (16) and as a result to activate the radio key device (26).

8. Protective cover apparatus (1) according to any one of the preceding claims, wherein the plug element (3) has an NFC communication device (28) for a wireless near-field communication and a payment control device (29) of the plug element (3) is configured to perform a cashless payment process via the NFC communication device (28) depending on a payment signal received via the electrical contacts.

## Revendications

1. Dispositif formant coque de protection (1) pour un terminal (30) mobile portable, présentant un corps de base de coque (2)
- avec une zone de plaque de base (4) destinée à couvrir une face arrière du terminal (30), laquelle zone de plaque de base (4) présente une surface d'appui (7) destinée à l'appui direct de la face arrière du terminal (30), et
- avec des parois latérales (8, 9) qui sont formées au niveau de la zone de plaque de base (4) et dépassent de la surface d'appui (7) et sont réalisées chacune pour s'appuyer directement à un côté étroit respectif (32) du terminal (30) et entourer celui-ci et tenir ainsi le terminal (30) au niveau de la surface d'appui (7), et
- le corps de base de coque (2) présente trois parois latérales (8, 9) dont deux (8) sont agencées au niveau d'un côté long respectif (11) de la surface d'appui (7) et la troisième (9) est agencée au niveau d'un premier côté court (12) de la surface d'appui (7), et un deuxième côté court (13), agencé à l'opposé du premier côté court (12), de la surface d'appui (7) est réalisé sans paroi de telle sorte que, lorsque le terminal (30) est placé dans le dispositif formant coque de protection (1), un côté étroit (33), agencé au niveau du deuxième côté court (13), du terminal (30) n'est pas couvert par le corps de base de coque (4),
**caractérisé en ce**
**qu'**un compartiment d'insertion (5) est réalisé dans la zone de plaque de base (4) et le dispositif formant coque de protection (30) présente un élément d'enfichage (3) au niveau duquel une zone d'enfichage (6) est réalisée de manière à correspondre par sa forme au moins en partie au compartiment d'insertion (5), dans lequel l'élément d'enfichage (3) peut être enfiché dans le compartiment d'insertion (5) par l'intermédiaire de la zone d'enfichage (6) et dans lequel un élément de mise en prise (15) avec contacts électriques (16) est agencé au niveau de la zone d'enfichage (6) et, lorsque la zone d'enfichage (6) est enfichée dans le compartiment d'insertion (5), l'élément de mise en prise (15) est agencé au niveau du deuxième côté court (13) de la surface d'appui (7) et l'élément de mise en prise (15) est réalisé comme un dispositif de préhension pour prendre l'élément d'enfichage (3) et présente à cet effet un creux de prise ou une empreinte de prise (35),
dans lequel l'élément d'enfichage (3) présente un circuit de charge (23) destiné à charger un accumulateur électrique du terminal (30) et le circuit de charge (23) présente un capteur de température (T) et est installé pour régler un courant de charge fourni au terminal (30) par l'intermédiaire des contacts électriques (16) en fonction d'un signal de température du capteur de température (T) de telle sorte qu'une intensité de courant d'un courant de charge est réglée plus petite à une température supérieure à une valeur de seuil de température qu'à une température inférieure à la valeur de seuil de température.

2. Dispositif formant coque de protection (1) selon la revendication 1, dans lequel la surface d'appui (7) et/ou une zone d'appui respective (20) des parois latérales (8, 9) qui, lorsque le terminal (30) est mis en place, s'appuie au côté étroit respectif (32) de celui-ci présentent une surface caoutchoutée.

3. Dispositif formant coque de protection (1) selon l'une quelconque des revendications précédentes, dans lequel des extrémités respectives (8'), proches du deuxième côté court (13), des deux parois latérales (8) agencées au niveau des côtés longs (11) sont formées cintrées l'une vers l'autre et forment ainsi, lorsque le terminal (30) est mis en place, un assemblage par concordance de forme destiné à retenir le terminal (30) contre un glissement vers l'extérieur en direction du deuxième côté court (13).

4. Dispositif formant coque de protection (1) selon l'une quelconque des revendications précédentes, dans lequel l'élément d'enfichage (3) présente pour un système de charge inductif une bobine électrique (22) côté secondaire dans le but de produire une tension électrique à partir d'un champ magnétique alternatif et le circuit de charge (23) est réalisé dans le but de fournir la tension aux contacts électriques (16).

5. Dispositif formant coque de protection (1) selon l'une quelconque des revendications précédentes, dans lequel l'élément d'enfichage (3) présente un accumulateur électrique (24) destiné à stocker de l'énergie électrique et le circuit de charge (17) est réalisé dans le but de fournir l'énergie électrique aux contacts électriques (16).

6. Dispositif formant coque de protection (1) selon l'une quelconque des revendications précédentes, dans lequel l'élément d'enfichage (3) présente une mémoire de données (25) et un circuit de commande de mémoire de l'élément d'enfichage (3) est installé pour échanger des données de mémoire entre la mémoire de données (25) et le terminal (30) par l'intermédiaire des contacts électriques.

7. Dispositif formant coque de protection (1) selon l'une quelconque des revendications précédentes, dans lequel l'élément d'enfichage (3) présente un dispositif de clé de radiocommande (26) destiné à la commande sans fil d'un système de fermeture d'un véhicule automobile et un circuit de communication (27) de l'élément d'enfichage (3) est installé pour recevoir au moins un signal de commande par l'intermédiaire des contacts électriques (16) et activer en conséquence le dispositif de clé de radiocommande (26).

8. Dispositif formant coque de protection (1) selon l'une quelconque des revendications précédentes, dans lequel l'élément d'enfichage (3) présente un dispositif de communication en champ proche dite NFC (28) en vue d'une communication sans fil en champ proche et un dispositif de commande de paiement (29) de l'élément d'enfichage (3) est installé afin d'effectuer une opération de paiement sans monnaie par l'intermédiaire du dispositif de communication en champ proche (28) en fonction d'un signal de paiement reçu par l'intermédiaire des contacts électriques.
